# EUROPÄISCHE PATENTANMELDUNG

(11) **EP 4 591 977 A2**
(43) Veröffentlichungstag der Anmeldung: **30.07.2025**
(21) Anmeldenummer: 24220659.7
(22) Anmeldetag: 17.12.2024
(51) Int. Cl.: B01J 20/28, B01J 20/32, B01D 53/02

(54) **AMIN-FUNKTIONALISIERTES SORPTIONSMITTEL**

(30) Priorität: 19.12.2023 DE 102023135825
(71) Anmelder: VOLKSWAGEN AG, 38440 Wolfsburg (DE)
(72) Erfinder: Prietzel, Dennis, 38126 Braunschweig (DE); Héraly, Frédéric, 17079 Solna, SE (SE); Yuan, Jiayin, 16972 Solna, SE (SE); Hedin, Niklas, 11760 Stockholm, SE (SE); Schütz, Christine, 38533 Vordorf (OT Rethen), DE (DE)
(74) Vertreter: MFG Patentanwälte Meyer-Wildhagen Meggle-Freund Gerhard PartG mbB

(57) **Zusammenfassung**

Vorliegend wird ein Verfahren zur Herstellung eines Sorptionsmittels, umfassend die Schritte Bereitstellen von oxidierten Nanocellulosefibrillen, und Umsetzen der oxidierten Nanocellulosefibrillen mit Aminooxysilan offenbart. Ferner werden ein Sorptionsmittel, die Verwendung des Sorptionsmittel und ein Verfahren zur Sorption von CO₂ offenbart.

## Beschreibung

Die Erfindung betrifft ein Verfahren zur Herstellung eines Sorptionsmittels, ein Sorptionsmittel, die Verwendung eines Sorptionsmittels und ein Verfahren zur Sorption von CO₂.

Die Selektive Aufnahme von Stoffen durch andere Stoffe wird überbegrifflich als Sorption bezeichnet. Dabei wird zwischen der Aufnahme im Inneren (Absorption) und Anlagerung an der Oberfläche (Adsorbtion) eines festen Körpers unterschieden. Verlaufen die beschriebenen Effekte des sorbierenden Stoffes (Sorbent bzw. Sorptionsmittel) gleichzeitig ab und überlagern sich, wird ebenfalls der Überbegriff "Sorption" verwendet. Im Umkehrschluss bedeutet das Ablösen adsobierter Stoffe von Oberflächen Desorption.

Bei der Aufnahme von Gasen durch feste Sorptionsmittel können prinzipiell zwei verschiedene Mechanismen ausgemacht werden. Bei der Chemiesorption erfolgt eine Anlagerung des Sorbens - des zu sorbierenden Stoffes - durch chemische Bindung an das Sorptionsmittel. Durch Aktivierungsenergie, welche über einen weiteren Temperaturbereich möglich ist, können Anbindungen in einer Monolage an spezifischen Stellen stattfinden. Der chemische Bindungsprozess kann unterschiedlich schnell ablaufen und ist häufig reversibel.

Die Sorptionsfähigkeit ist ein weiteres Kriterium, das je nach Sorptionsprozess von Interesse sein kann. Von besonderem Interesse ist es daher, die Sorptionsfähigkeiten und -eigenschaften von Sorptionsmitteln zu steuern.

Zur Kohlenstoffdioxidabscheidung können unterschiedliche Technologien herangezogen werden. Diese lassen sich grob durch deren Funktionsweise kategorisieren. Dabei wird bei der Kohlendioxidentfernung zwischen Punktquellen aus Industrieprozessen und der Umgebungsluft differenziert.

Beim Direct Air Capture Verfahren (DAC) zur Kohlenstoffdioxid-Gewinnung wird Umgebungsluft durch ein Filtermedium (Sorptionsmittel) geleitet, das dem Gasgemisch das CO₂ entzieht. Dabei können die angewendeten Filtermedien und die damit zugrunde liegenden Prozessphasen relativ unterschiedlich sein. Für die CO₂-Abscheidung werden Ansätze mit Lösungsmitteln, Filtermembranen, organischen und anorganischen bzw. chemischen, sowie physikalischen Sorptionsmitteln und Hybridsorbentien verfolgt. Steuerbare Parameter wie Zeit, Luftmassenstrom, Luftdruck, Temperatur, Feuchtigkeit etc. erhöhen die Effizienz und den Wirkungsgrad der Anlagen.

Die Verwendung von Sorptionsmitteln bei der CO₂-Abscheidung stellt einen wesentlichen Baustein bei der Aufreinigung von Gasmischungen, wie Abluft oder Umgebungsluft. Auch die selektive Abtrennung von Gasen, wie CO₂, für die Weiterverarbeitung des abgetrennten Gases in chemischen Prozessen, stellt ein wichtiges Anwendungsgebiet von Sorptionsmitteln dar.

Die Entwicklung eines aminfunktionalisierten Adsorptionsmittels zur Abscheidung von Kohlendioxid aus der Luft wird beispielsweise in der Dissertation von Christoph Gebald der ETH Zürich aus dem Jahr 2014 (Dissertationsnummer 21853) beschrieben.

Die einkomponentige und binäre CO₂- und H₂O-Adsorption von Amin-funktionalisierter Cellulose wird unter anderem in Gebald et al., Environ. Sci. Technol. 2014, 48, 2497-2504, offenbart.

Aufgabe der vorliegenden Erfindung ist es, ein Verfahren zur Herstellung eines Sorptionsmittels, ein Sorptionsmittel, die Verwendung eines Sorptionsmittels und ein Verfahren zur Sorption von CO₂ bereitzustellen, das/die die oben genannten Nachteile wenigstens teilweise überwindet.

Diese Aufgabe wird durch das erfindungsgemäße Verfahren nach Anspruch 1, ein Sorptionsmittel nach Anspruch 8, eine Verwendung nach Anspruch 11 und Verfahren nach Anspruch 12 gelöst.

Ein Verfahren zur Herstellung eines Sorptionsmittels, umfasst die Schritte:
- Bereitstellen von oxidierten Nanocellulosefibrillen, und
- Umsetzen der oxidierten Nanocellulosefibrillen mit Aminooxysilan.

Nanocellulose ist nano-strukturierte Zellulose, deren Partikel vorzugsweise kleiner als 100 nm groß sind. Nano-strukturierte Zellulose kann unterteilt werden in Cellulose-Nanokristalle (CNC oder NCC), in Cellulose-Nanofasern bzw. Zellulosenanofibrillen/Nanocellulosefibrillen (CNF oder NFC) und bakterielle Nanocellulose. Im Gegensatz zu Zellulosenanokristallen bestehen Zellulosenanofibrillen sowohl aus kristallinen als auch aus amorphen Bereichen.

CNF besteht aus nanogroßen Zellulosefibrillen mit einem hohen Verhältnis von Länge zu Breite. Die Fibrillen können aus jeder zellulosehaltigen Quelle gewonnen werden, einschließlich aus Fasern auf Holzbasis (Zellstofffasern). Die Fibrillen können durch mechanische Behandlung, wie Hochdruck-, Hochtemperatur- und Hochgeschwindigkeits-Schlaghomogenisierung, Mahlen oder Mikrofluidisierung isoliert werden, als auch durch chemische und enzymatische Behandlung erhalten werden erfolgen.

CNC kann durch Säurehydrolyse aus nativen Fasern gewonnen werden, wobei hochkristalline und starre Nanopartikel entstehen, die kürzer sind (z. B. 100 bis 1000 nm) als die Cellulose-Nanofibrillen (CNF), die durch Homogenisierung, Mikrofluidisierung oder Mahlen gewonnen werden.

Ein erfindungsgemäßes Verfahren umfasst den Schritt der Bereitstellung von oxidierten Nanocellulosefibrillen. Vorzugsweise handelt es sich bei oxidierten Nanocellulosefibrillen, die hierin auch als oxidierte Nanocellulose bezeichnet werden, um oxidierten Zellstoff/Zellulose, der/die mechanisch zerkleinert wird, um oxidierte Cellulose-Nanofibrillen (oxidierte CNF) zu ergeben. Die Oxidation der Zellulosefibrillen kann durch gängige Oxidationsmittel bzw. gängige Oxidationsverfahren durchgeführt werden. Ein beispielhaftes Oxidationsmittel ist TEMPO (2,2,6,6-Tetramethylpiperidin-1-oxyl). Die oxidierte Zellulose kann hergestellt werden, indem der Holzzellstoff (mehr als 95% Zellulose), nachdem das Lignin aus dem Holzzellstoff größtenteils entfernt wurde, durch Tempo-Katalyse und Oxidationsmittel oxidiert wird. Anschließend kann diese dann der mechanischen Behandlung unterzogen werden, um ihn in sogenannte TEMPO-oxidierte Zellulosenanofibrillen zu zerlegen [Quelle: https://doi.org/10.1021/bm0703970].

Oxidierte Nanocellulose ist eine negativ geladene Nanocellulose, die Carboxylatgruppen (-COO) und -OH-Gruppen aufweist.

In einer Ausführungsform handelt es sich bei der oxidierten Nanocellulose um TEMPO-oxidierte Nanocellulose. Die TEMPO-oxidierte Nanocellulose kann einen Oxidationsgrad im Bereich von 0,1 mmol/g bis 1,2 mmol/g, vorzugsweise im Bereich von 0,3 mmol/g bis 1 mmol/g haben.

Ein erfindungsgemäßes Verfahren umfasst ferner den Schritt des Umsetzens der oxidierten Nanocellulosefibrillen mit Aminooxysilan. Bei der Umsetzung der oxidierten Nanocellulosefibrillen mit dem Aminooxysilan kann das Aminooxysilan im wässrigen Medium hydrolysiert werden. Beispielsweise können die oxidierten Nanocellulosefibrillen in einer Konzentration von 0,75 Gew.% vorliegen (99,25 Gew.% Wasser).

Bei einem Aminooxysilan handelt es sich um eine Silanverbindung, umfassend mindestens eine Aminogruppe (-NH₂) und mindestens eine Oxy-Gruppe, vorzugsweise eine Alkoxygruppe (z. B. Methoxygruppe, Ethoxygruppe, Propoxygruppe, etc.).

In Ausführungsformen kann es sich bei dem Aminooxysilan um ein Amino-dioxysiloxan oder ein Amino-trioxysiloxan handeln.

Durch den Ersatz einer der Alkoxygruppen, welche die Gruppen sind, die hydrolysiert werden, z. B. durch eine Methylgruppe, kann der unerwünschte Aufbau eines 3D-Netzwerks bei der Reaktion des Aminooxysilans mit dem oxidierten CNF unterbunden werden.

Liegen drei Alkoxygruppen in dem Aminooxysilan vor, kann dies gegebenenfalls zur Ausbildung eines 3D-Netzwerks bei der Reaktion des Aminooxysilans mit dem oxidierten CNF kommen.

Wenn das Aminooxysilan an die CNF umgesetzt wird, kann die undefinierte Vernetzung zwischen Aminooxysilan und CNF untereinander, die das unerwünschte 3D bildet, verhindert werden. Bei einer 3D-Netzausbildung könnten die primären Amine CO₂ "spüren" und darauf zugreifen. Daher kann es, je nach Anwendung vorteilhaft sein, mit einem Aminooxysilan mit 2 Alkoxy- und nicht 3 Alkoxygruppen zu starten

Ein beispielhaftes Aminooxysilan kann ausgewählt sein aus der Gruppe bestehend aus (3-Aminopropyl)triethoxysilan (APTES), 3-(Methylamino)propyl)trimethoxysilan (APTMS), 3-(2-Aminoethylamino)propyltriethoxysilan (AEAPTS), N-(2-Aminoethyl)-3-aminopropylmethyldimethoxysilan (AEAPDMS) und 3-Aminopropyldiethoxymethylsilan (APDMS).

In einer Ausführungsform handelt es sich bei dem Aminooxysilan um (3-Aminopropyl)triethoxysilan (APTES).

In einer weiteren Ausführungsform handelt es sich bei dem Aminooxysilan um 3-Aminopropyldiethoxymethylsilan (APDMS).

In manchen Ausführungsformen kann es sich auch um eine Mischung von mindestens zwei Aminooxysilanen handeln.

Die oxidierte Nanocellulose und das Aminooxysilan können in einem bestimmten Mengenbereich miteinander in Kontakt gebracht werden. Das Verhältnis bezieht sich dabei auf die Menge an OH-Gruppen der oxidierten Nanocellulose und der/den Oxygruppe(n) des Aminooxysilans.

In einer beispielhaften Ausführungsform ist das Verhältnis von oxidierten Nanocellulosefibrillen : Aminooxysilan im Bereich von 1:1 bis 1:16. Vorzugsweise ist das Verhältnis von oxidierten Nanocellulosefibrillen : Aminooxysilan im Bereich von 1:2 bis 1:8, weiter bevorzugt ist das Verhältnis von oxidierten Nanocellulosefibrillen : Aminooxysilan im Bereich von 1:3 bis 1:5.

Das Aminooxysilan kann mittels verschiedener Methoden getrocknet werden. Die Trocknung kann durch Einsatz von Temperatur, Druck und/oder Kälte erfolgen. In einer Ausführungsform umfasst ein erfindungsgemäßes Verfahren den Schritt der Gefriertrocknung von Aminooxysilan.

Die Gefriertrocknung kann mittels verschiedener Methoden durchgeführt werden. Das Aminooxysilan kann in einer geeigneten Kühlkammer gefriergetrocknet werden. Das Aminooxysilan kann auch durch Einsatz von flüssigem Stickstoff gefriergetrocknet werden.

Dabei wird das Aminooxysilan mit flüssigen Stickstoff

Die Trocknung des Aminooxysilans kann einen Einfluss auf die Eigenschaften als Sorptionsmittel haben.

Die Qualität der Gefriertrocknung kann von mehreren Faktoren abhängen, u. a. von der Gefriergeschwindigkeit und der Größe der Eiskristalle.

Wenn man eine Probe beispielsweise mit flüssigem N₂ einfriert, friert das Material schnell ein. Die Temperatur von -196 °C kann das Wasser in der Probe extrem schnell gefrieren lassen. Die Verwendung von flüssigem N₂ kann so zu einer besseren CO₂-Aufnahme im Material führen. Gründe können hierfür sein, dass schnelles Gefrieren zur Bildung kleinerer Eiskristalle führen kann, als langsameres Gefrieren in einem Gefrierschrank mit -30°C. Kleinere Eiskristalle können für den Erhalt der Struktur und der Oberfläche poröser Materialien von Vorteil sein, was die CO₂-Aufnahme verbessern kann. Schnelles Gefrieren kann zu einer besseren strukturellen Integrität beitragen und damit die ursprüngliche Struktur des Materials zu erhalten, während langsameres Gefrieren manchmal größere strukturelle Verformungen oder Veränderungen verursachen kann. Aufgrund der extrem niedrigen Temperatur von flüssigem N₂ wird wahrscheinlich das gesamte Wasser eingefroren. In einigen Fällen kann es vorkommen, dass bei einer Gefriertemperatur von -30 °C nicht das gesamte Wasser in der Probe gefriert, was den anschließenden Gefriertrocknungsprozess beeinträchtigen könnte.

Ferner ist Gegenstand der vorliegenden Erfindung, ein Sorptionsmittel, hergestellt nach einem erfindungsgemäßen Verfahren.

Ein erfindungsgemäßes Sorptionsmittel umfasst mindestes eine Amingruppe. Bei den Amingruppen kann es sich um primäre Amingruppen (-NH₂), oder alternativ auch um sekundäre Amingruppen (-NRH) handeln. Der Amingruppengehalt ist dabei insbesondere abhängig von den eingesetzten Edukten, wie den Aminooxysilanen. Durch den Amingruppengehalt können beispielsweise die Sorptionseigenschaften, wie die Sorptionsfähigkeit, gesteuert werden.

In einer Ausführungsform ist der Amingehalt von primären Amingruppen des Sorptionsmittels im Bereich von 1 mmol/g bis 12 mmol/g ist. Vorzugsweise ist der Amingehalt von primären Amingruppen des Sorptionsmittels im Bereich von 2 mmol/g bis 10 mmol/g, weiter bevorzugt ist der Amingehalt von primären Amingruppen des Sorptionsmittels im Bereich von 3 mmol/g bis 8 mmol/g.

Ein erfindungsgemäßes Sorptionsmittel kann für die Sorption verschiedenster Stoffe, insbesondere gasförmiger Stoffe eingesetzt werden.

In einer Ausführungsform wird das Sorptionsmittel zur Sorption von CO₂ verwendet.

Erfindungsgemäße Sorptionsmittel weisen insbesondere eine höhere CO₂-Adsorption, beispielsweise aus der Umgebungsluft, auf. Auch Ad- und Desorptionsprozesse sind in der Regel energetisch effizienter als dementsprechende Prozesse mit Sorptionsmitteln aus dem Stand der Technik.

Erfindungsgemäße Sorptionsmittel sind im Vergleich zu anderen Sorptionsmitteln in der Regel gut gegenüber Feuchtigkeit, z. B. Feuchtigkeit in der Luft, beständig.

In einer Ausführungsform kann das Sorptionsmittel mindestens eine Carboxygruppe (-COO) umfassen.

Ferner ist Gegenstand der vorliegenden Erfindung ein Verfahren zur Sorption von CO₂ umfassend die Schritte:
- Bereitstellen einer Gasmischung umfassend CO₂,
- Inkontaktbringen von mindestens einem erfindungsgemäßen Sorptionsmittel mit der Gasmischung.

Bei der Gasmischung umfassend CO₂ kann es sich um verschiedene Varianten handeln. Beispielsweise kann es sich bei der Gasmischung um Abluft aus Industrieprozessen, Abluft aus Maschinen und/oder Fahrzeugen, Atmosphärenluft etc. handeln. In einer bevorzugten Ausführungsform handelt es sich bei der Gasmischung umfassend CO₂ um Atmosphärenluft.

Die Gasmischung kann mittels geeigneter Vorrichtungen zur Verfügung gestellt werden. Beispielhafte Vorrichtungen können Gaskartuschen, Zuleitungen, Gasabscheidevorrichtungen, etc. sein.

Das Inkontaktbringen der Gasmischung umfassend CO₂ mit dem Sorptionsmittel findet vorzugsweise für einen definierten Zeitbereich statt. In einer Ausführungsform findet das Inkontaktbringen für eine Zeit im Bereich von 5 min bis 1440 min statt. Vorzugsweise findet das Inkontaktbringen für eine Zeit im Bereich von 10 min bis 240 min statt, weiter bevorzugt für eine Zeit im Bereich von 20 min bis 180 min, noch weiter bevorzugt für eine Zeit im Bereich von 30 min bis 120 min.

Besonders vorteilhaft kann ein erfindungsgemäßes Verfahren zur Sorption von CO₂ in einem Direct Air Capture-Verfahren (DAC-Verfahren) eingesetzt werden. Dabei kann CO₂ aus Umgebungsluft gewonnen werden. Das CO₂ kann in weiteren Verfahren, wie beispielsweise als Rohstoff für die Kunststoffgewinnung eingesetzt werden. Das gewonnene CO₂ kann auch in diversen weiteren Anwendungsgebieten, wie Schweißprozesse, E-Fuels, Getränkeherstellung, CO₂-Zertifikatehandel, etc. eingesetzt werden.

In einer Ausführungsform ist die dynamische CO₂-Adsorptionskapazität für die Abscheidung von Umgebungsluft im Bereich von 0,3 bis 8 mmol/g. Vorzugsweise ist CO2-Kapazität des Sorptionsmittel im Bereich von 0,8 bis 8, weiter bevorzugt im Bereich von 1,5 bis 8, noch weiter bevorzugt im Bereich von 3 bis 8. In einer alternativen Ausführungsform ist die dynamische CO₂-Adsorptionskapazität für die Abscheidung von Umgebungsluft im Bereich von 0,3 bis 6 mmol/g.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ausführungsbeispiele der Erfindung werden nun beispielhaft und unter Bezugnahme auf die beigefügte Zeichnung beschrieben, in der:
Fig. 1 schematisch beispielhafte Hydrolyse eines Aminosilans,
Fig. 2 schematisch die Kondensation von hydrolysiertem Aminooxysilan und CNF,
Fig. 3a schematisch die Kondensation von hydrolysiertem Aminooxysilan und oxidiertem CNF,
Fig. 3b schematisch ein Sorptionsmittel,
Fig. 3c schematisch die Reaktion eines Sorptionsmittels mit CO₂,
Fig. 4a die CO₂ Aufnahme in Abhängigkeit von der Konzentration an oxidiertem CNF,
Fig. 4b die CO₂ Aufnahme in Abhängigkeit vom Trockengewichtsverhältnis von Aminooxisilan und oxidiertem CNF,
Fig. 5a die CO₂ Aufnahme verschiedener Sorptionsmittel in Abhängigkeit unterschiedlicher Drücke,
Fig. 5b verschiedene Aminooxysilane,
Fig. 6 die BET Adsorptions-Isotherme in Stickstoff bei 77K,
Fig. 7a mit Aminoxysilan-modifizierte Cellulose-Nanofibrillen,
Fig. 7b gealterte Aminoxysilan-modifizierte Cellulose-Nanofibrillen,
Fig. 8a die CO₂-Adsorption eines Sorptionsmittels bei 0°C und 100% CO₂-Sättigung der Gasmischung,
Fig. 8b CO₂-Adsorption eines CNF-Sorptionsmittels bei 0,4 mbar CO₂ Partialdruck
Fig. 9 die CO₂-Adsorptions-Isotherme eines CNF-Sorptionsmittels bei 5 °C mit CO₂,
Fig. 10a die durchschnittliche Verteilung des Porendurchmessers von X5,
Fig. 10b die Morphologie des Rasterelektronenmikroskop-Querschnitts von X5,
Fig. 10c das Zeta-Potential von X5 vor der Gefriertrocknung,
Fig. 11a die CO₂-Sorption in Abhängigkeit vom absoluten CO₂-Druck,
Fig. 11b die CO₂-Sorption in Abhängigkeit vom relativen CO₂-Druck,
Fig. 12a, 12b und 12c zeigen die Rheologie-Daten von mit APDMS funktionalisiertes CNF,
Fig. 13 die thermische Stabilitätsanalyse eines Sorptionsmittels,
Fig. 14a die Sorptionsfähigkeit eines Sorptionsmittels,
Fig. 14b die Transmission verschiedener Sorptionsmittel,
Fig. 15 Darstellungsformen des Sorptionsmittels,
Fig. 16a, 16b Bilder von Sorptionsmittel bei unterschiedlicher Rührgeschwindigkeit, und
Fig. 17 ein Verfahren zur Herstellung eines Sorptionsmittels zeigen.

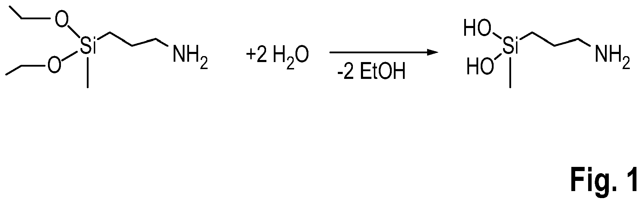

Fig. 1 zeigt schematisch eine beispielhafte Hydrolyse eines Aminooxysilans. Dabei wird 3-Aminopropyldimethoxymethylsilan mit Wasser unter Abspaltung von Methanol zu 3-Aminopropyldihydroxymethylsilan, einem hydrolysiertem Aminooxysilan, umgesetzt.

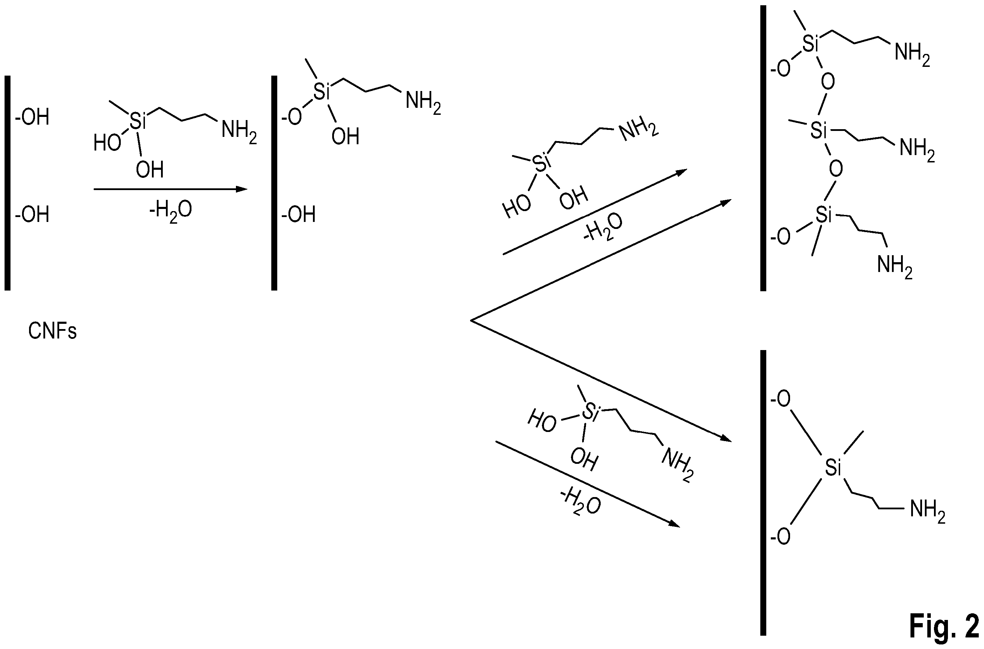

Fig. 2 zeigt schematisch die Kondensation von hydrolysiertem Aminooxysilan und oxidiertem CNF. 3-Aminopropyldihydroxymethylsilan lagert sich unter Abspaltung von Wasser an eine Hydroxy-Gruppe des oxidierten CNF an. Unter Abspaltung von weiterem Wasser wird mindestens ein weiteres 3-Aminopropyldihydroxymethylsilan an das oxidierte CNF angelagert. Dabei kann es zu einer Verkettung von mindestens zwei Silan-Molekülen kommen, oder einer Reaktion einer weiteren OH-Gruppe mit dem Silan-Molekül.

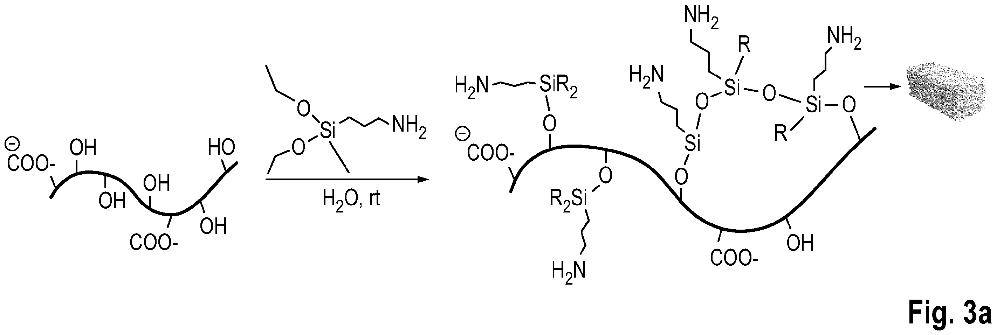

Fig. 3a zeigt schematisch die Kondensation von hydrolysiertem Aminooxysilan und oxidiertem CNF. Dabei werden unter Abspaltung von Wasser bei Raumtemperatur Silan-Gruppen an die Hydroxy-Gruppen angelagert. Die negativ geladenen Carboxy-Gruppen bleiben dabei erhalten. Unter anschließender Gefriertrocknung (z. B. mit flüssigem Stickstoff) entsteht ein schwammartiges Sorptionsmittel mit einer definierten Oberfläche.

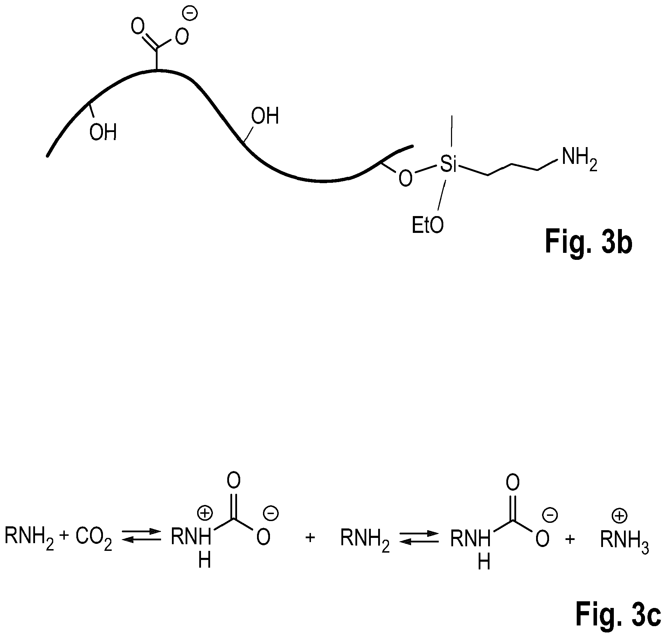

Fig. 3b stellt schematisch ein Sorptionsmittel dar. Anstelle des Methylrests können verschiedene Reste stehen. Es kann für einen Alkylrest, einen Alkoxyrest, einen Hydroxyrest, etc. stehen.

Fig. 3c zeigt schematisch die Reaktion eines Sorptionsmittels RNH₂ mit CO₂. RNH₂ reagiert dabei in einer Gleichgewichtsreaktion mit CO₂ zu einer Carbaminsäure. Unter Reaktion mit einem weiteren RNH₂ reagiert die Carbaminsäure in einer Gleichgewichtsreaktion zu einem Carbamat und einem RNH_{3⁺}.

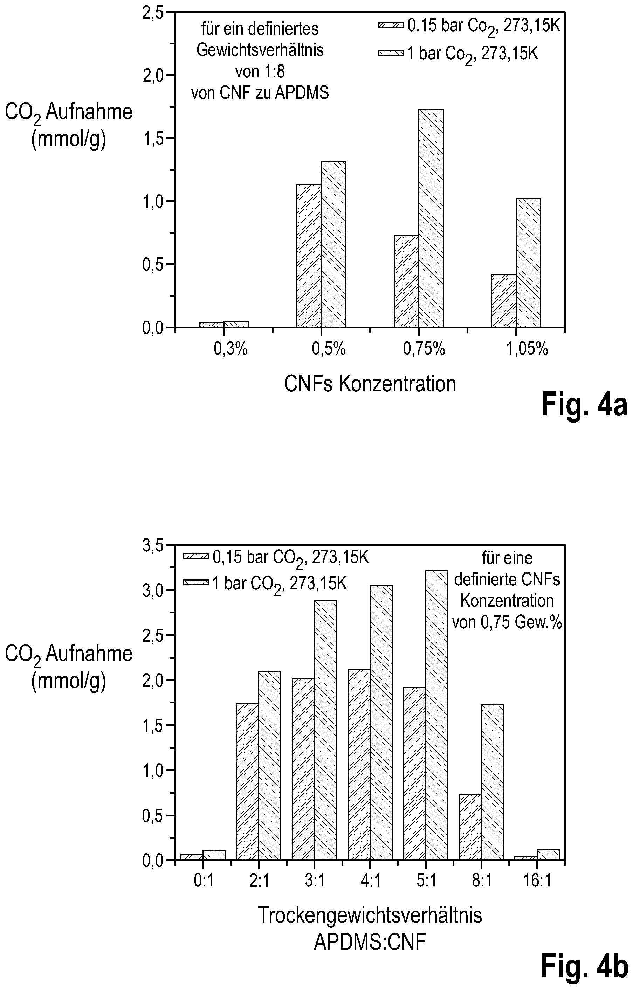

Fig. 4a zeigt die CO₂ Aufnahme in Abhängigkeit von der Konzentration an oxidiertem CNF. Dabei wird für ein festgelegtes Verhältnis von 1:8 von oxidiertem CNF zu APDMS bei unterschiedlichen CO₂-Drücken (0,15 bar und 1 bar) bei 273,15K die CO₂-Aufnahme bestimmt. Bei einer Konzentration an oxidiertem CNF von 0,75 Gew.% und einem CO₂-Druck von 1 bar kann die höchste CO₂-Aufnahme detektiert werden. Es kann gezeigt werden, dass bei zu hoher Verdünnung die Hydrolyse des Aminooxysilans dominiert und bei zu hoher Konzentration das Aminooxysilan (APDMS) nicht mit der Oberflächengruppe des oxidierten CNF reagieren kann. Hierin handelt es sich bei der oxidierten CNF um intrinsisch oxidierte CNF, d.h., die CNF ist von Natur aus oxidiert. Die intrinsische Oxidation erfolgt bei der Umsetzung von Zellulosefaser zu CNF.

Fig. 4b zeigt die CO₂ Aufnahme in Abhängigkeit vom Trockengewichtsverhältnis von Aminooxisilan (APDMS) und oxidiertem CNF. Die Messungen wurden für eine feste Konzentration von oxidiertem CNF von 0,75 Gew.% durchgeführt. Die Messungen wurden für unterschiedliche Drücke von CO₂ (0,15 bar und 1 bar) bei 273,15K durchgeführt.

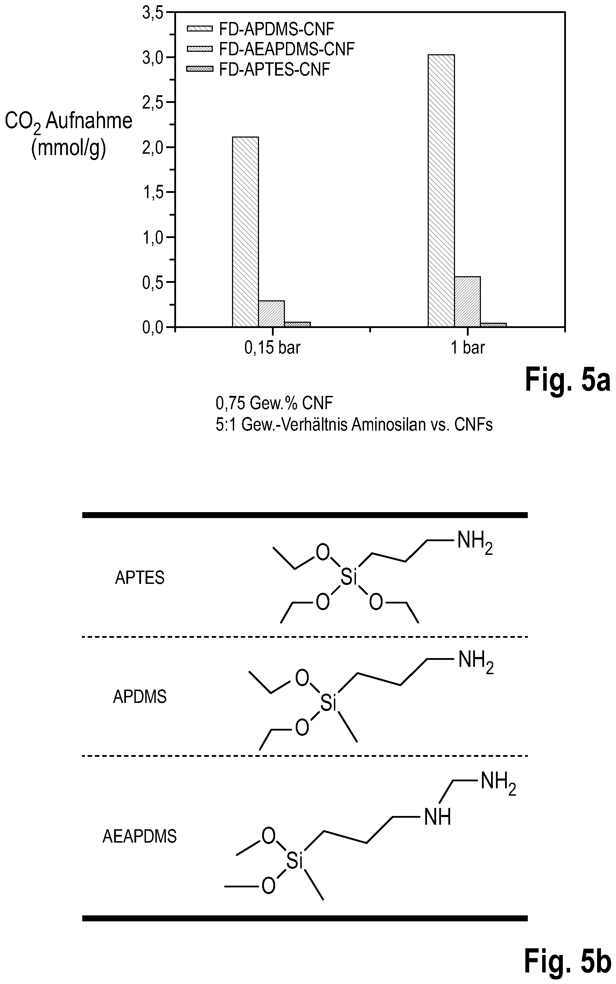

Fig. 5a stellt die CO₂ Aufnahme verschiedener Sorptionsmittel in Abhängigkeit unterschiedlicher Drücke dar. Bei den Sorptionsmitteln handelt es sich um CNF, das mit APDMS, AEAPDMS bzw. APTES funktionalisiert ist. Das Verhältnis von Aminooxysilan und CNF ist 5:1 und die Konzentration von CNF ist 0,75 Gew.%. Die Messungen wurden bei unterschiedlichen CO₂-Drücken, 0,15 bar bzw. 1 bar, durchgeführt.

Fig. 5b zeigt verschiedene Aminooxysilane.

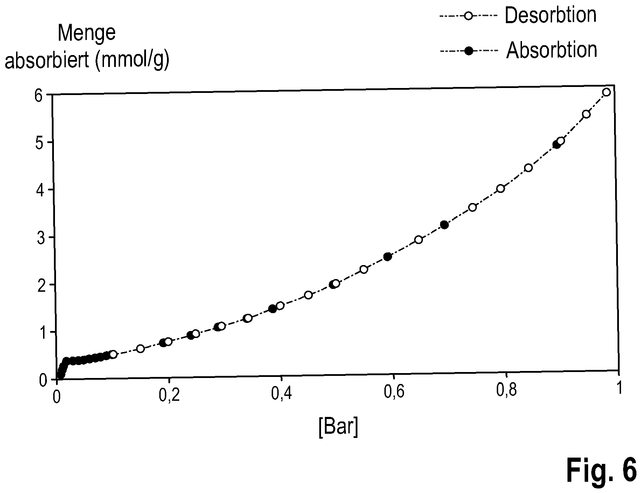

Fig. 6 zeigt die BET Isotherme in Stickstoff bei 77K. Gezeigt sind die Adsorption und die Desorption von X5, 24h. X5, 24h ist mit ADPMS funktionalisiertes CNF, das 24h während der Herstellung gerührt wurde und anschließend gefriergetrocknet wurde.

Die physikalischen Daten von X5, 24h sind wie folgt:

**Tabelle 1**

| Probe | Probengewicht [Gramm] | Spezifische Oberfläche (BET) [m²/g] | Gesamtes Porenvolumen bei p/p0 = 0,99000 [cm³/g] | Durchschnittliche Porengröße [Nm] |
|---|---|---|---|---|
| X5, 24h | 0.0181 | 51,87 | 0,20 | 15,68 |

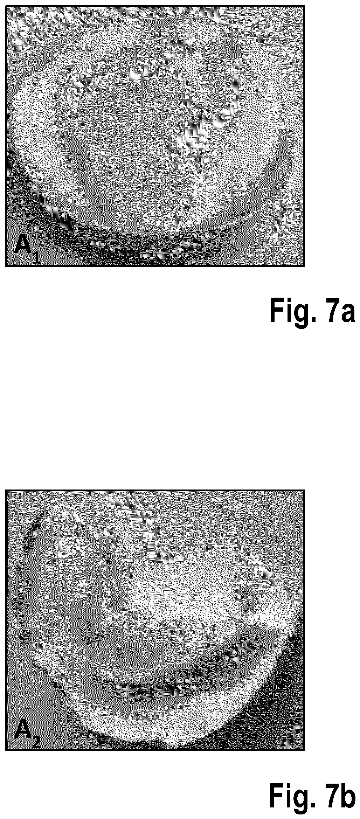

Fig. 7a zeigt mit Aminoxysilan-modifizierte Cellulose-Nanofibrillen.

Fig. 7b zeigt gealterte Aminoxysilan-modifizierte Cellulose-Nanofibrillen.

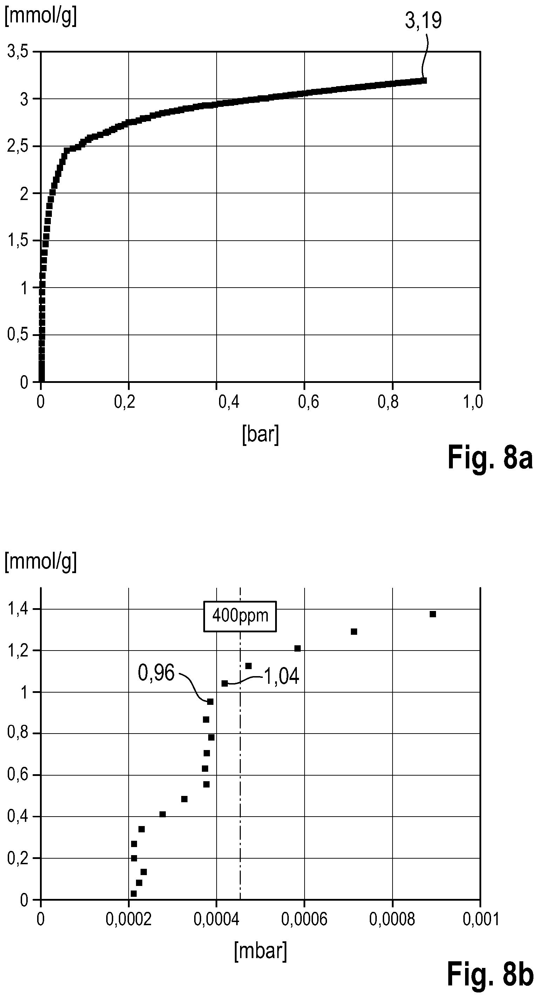

Fig. 8a stellt die CO₂-Adsorption des Sorptionsmittels X5 (24h) bei 0°C und bis 0,1 bar dar.

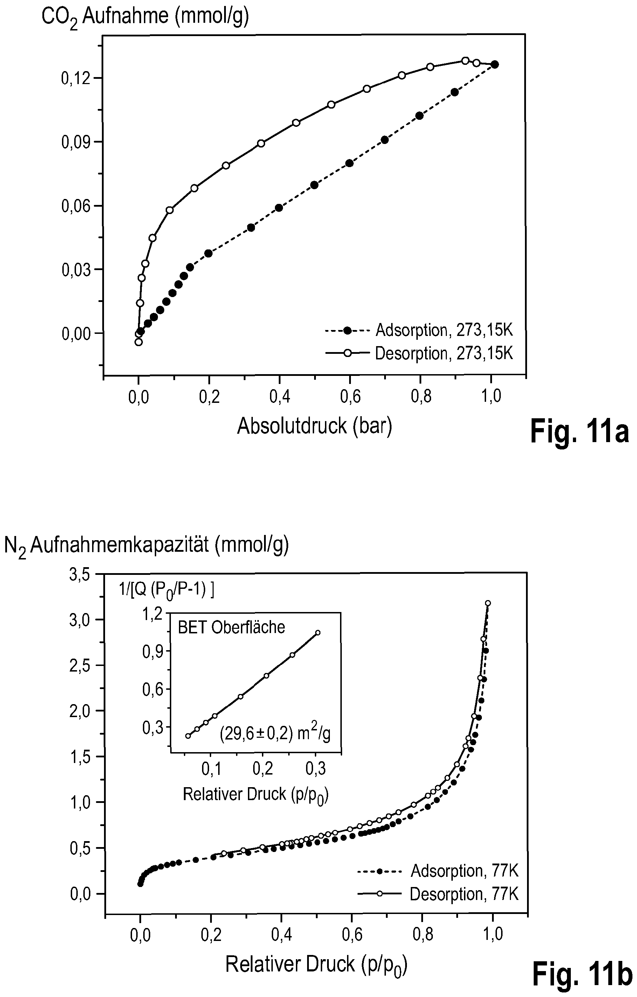

Fig. 8b zeigt die statische CO₂-Adsorption aus der BET-Messung bei einem Partialdruck von 0,4 mbar (entspricht dem Dampfdruck bei 400ppm CO₂. Bei dem Sorptionsmittel handelt es sich um nicht-funktionalisiertes oxidiertes CNF (siehe auch Abb. 11b).

Die spezifische Oberfläche (gemessen mittels BET) von unfunktionalisiertem oxidierten CNF ist 29,6 +/- 0,2 m²/g (siehe auch Abb. 11b). Die spezifische Oberfläche von funktionalisiertem oxidierten CNF ist 17,3 +/- 0,1 m²/g. Die CO₂-Aufnahme ist 1,0 mmol/g bei 0,4 mbar CO₂-Druck und 3,2 mmol/g bei 0, 87 bar CO₂-Druck. Der Amin-Gehalt des Sorptionsmittel ist 5,80 mmol/g (siehe Abb. 8a und 8b). Die Amineffizienz beträgt 55,17% (gemessen mittels Elementaranalyse; siehe Tabelle 4).

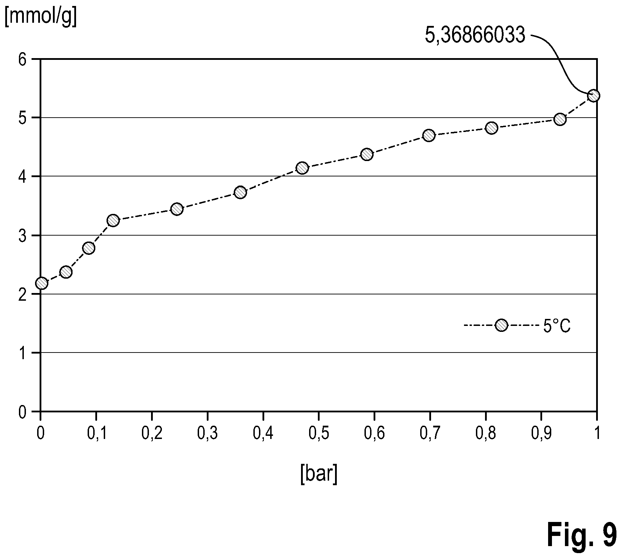

Fig. 9 stellt die CO₂-Isotherme bei 5 °C und einer BET CO₂ Adsorption bis 1 bar dar.

Die Ergebnisse der Elementaranalyse von X5, 24h sind wie folgt:

**Tabelle 2**

| Probe | Nr. | %C | %H | %N | N (mmol/g) | Primäre Amingruppe (mmol/g) |
|---|---|---|---|---|---|---|
| X5, 24h | 1 | 37,60 | 7,12 | 1 6,77 | 4,83 | 4,8 |
| | 2 | 37,57 | 7,18 | 1 6,74 | | |

Die folgende Tabelle zeigt die dynamische CO₂-Adsorptionskapazität in Abhängigkeit von der Adsorptionszeit bei einer Adsorptionssäule von 10 mm Durchmesser, einer Füllhöhe von 5,2 mm, einer Einwaage von 0,0398g, einer Durchflussrate von 0,75 m/s, einem Umgebungsluftstrom von 5 °C und 80% relativer Luftfeuchte. Das Material war bei 120 °C 1h unter Stickstofffluss von 0,75 m/s vorgetrocknet worden.

**Tabelle 3**

| Ads. zeit | X5, 24h |
|---|---|
| 1 min | 0,21 mmol/g |
| 15 min | 3,15 mmol/g |
| 30 min | 6,3 mmol/g |
| 45 min | 9,45 mmol/g |
| 60 min | 12,6 mmol/g |

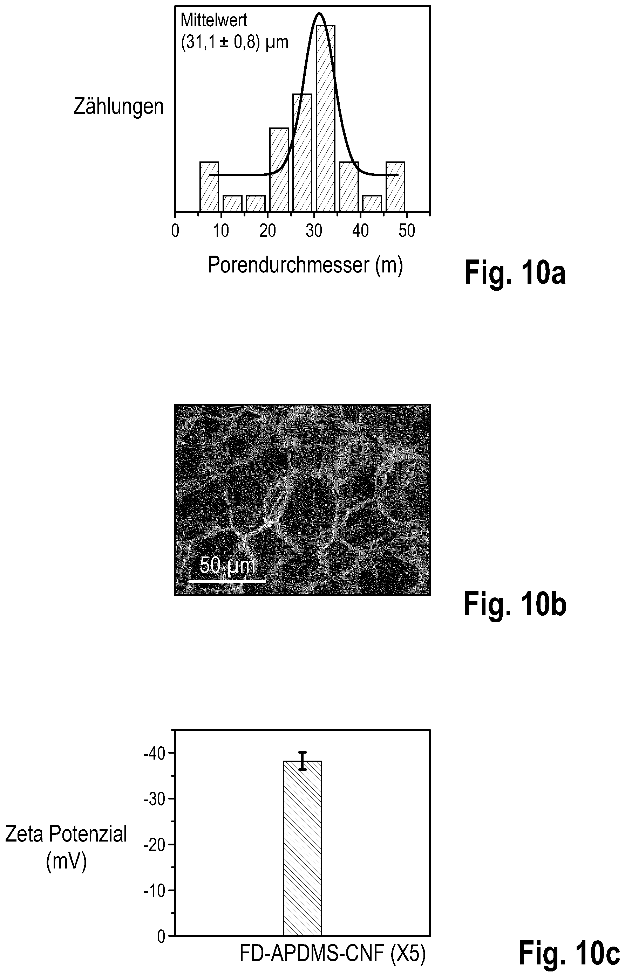

Fig. 10a zeigt die durchschnittliche Verteilung des Porendurchmessers von X5, 24h.

Fig. 10b zeigt ein Rasterelektronenmikroskopie-Querschnittsbild von X5, 24h.

Fig. 10c zeigt das Zeta-Potential in wässrigem Medium der aminierten CNF-Probe vor dem Gefriertrocknen, die zu X5 gehört. Es kann gezeigt werden, dass das Anpfropfen von Aminen an oxidiertem CNF erfolgreich war, da es kolloidal stabil ist.

Die Elementaranalyse des Sorptionsmittels X5, 24h lieferte die folgenden Ergebnisse:

**Tabelle 4**

| Probe | %C | %H | %N |
|---|---|---|---|
| Kontrolle 2 (oxidiertes CNF) | 37,03 ± 0,02 | 6,00 ± 0,02 | 0,00 ± 0,00 |
| FD-APDMS-CNFs (24h, X5) | 39,69 ± 0,01 | 8,61 ± 0,01 | 8,12 ± 0,01 |

**Tabelle 5**

| EA (X5, 24h) | Amin- Gehalt (mmol/g) | CO₂ Aufnahme (mmol/g) | Amineffizienz [CO₂/N] (%) | BET (m²/g) |
|---|---|---|---|---|
| 8.12% N | 5.80 | 3.2 | 55.17 | 17.3 |

Fig. 11a zeigt die CO₂-Aufnahme in Abhängigkeit vom absoluten Druck. Es sind sowohl die Desorption, als auch die Adsorption dargestellt. Als Sorptionsmittel wurde oxidiertes CNF(CNF mit TEMPO oxidiert) eingesetzt.

Fig. 11b zeigt die N₂-Aufnahmekapazität in Abhängigkeit vom relativen Druck. Es sind sowohl die Desorption, als auch die Adsorption dargestellt. Als Sorptionsmittel wurde oxidiertes CNF(CNF mit TEMPO oxidiert) eingesetzt. Zusätzlich ist die Oberfläche, ermittelt durch BET, gezeigt.

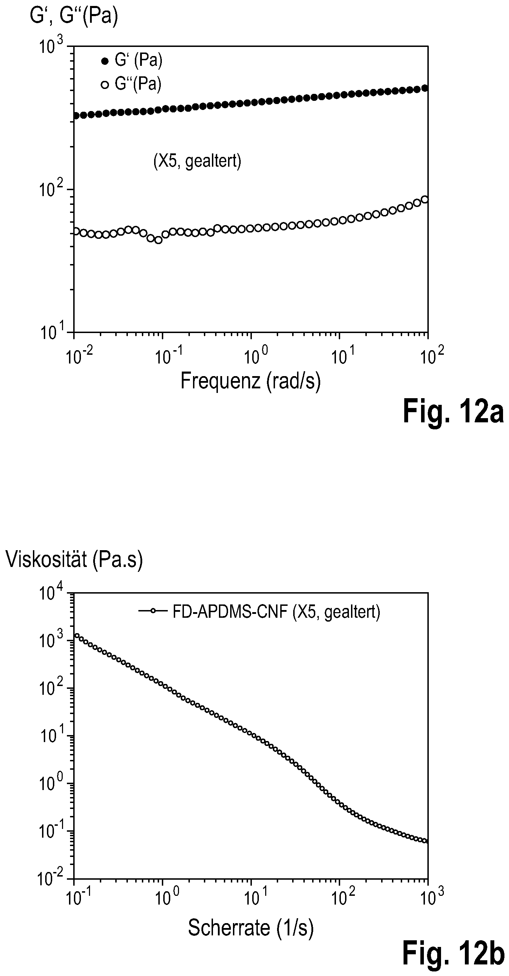

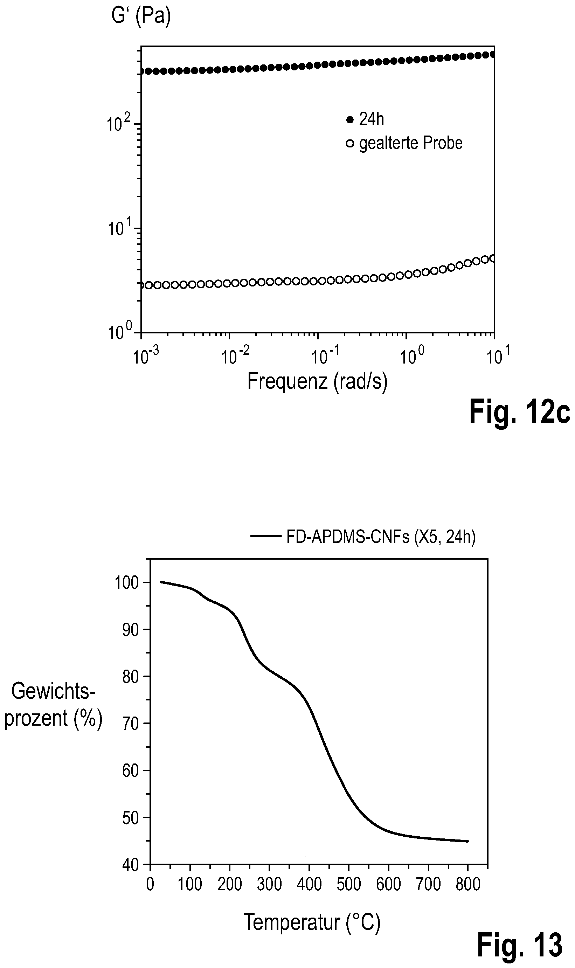

Fig. 12a, 12b und 12c zeigen die Rheologie-Daten von mit APDMS funktionalisiertes CNF (X5, 24h, CNF mit TEMPO oxidiert), um den Alterungseffekt zu untersuchen. Bei G`>G" handelt es sich um ein vornehmlich elastisches (gelartiges) Verhalten. Bei G` (gealtert) >> G` (24h) bildet sich ein gut ausgebildetes starkes und vernetztes Netzwerk. G` und G" sind konstant, wenn die viskoelastischen Eigenschaften weitestgehend unabhängig von der Zeitskala der Verformung sind, und keine Umstrukturierung des Hydrogels im Laufe der Zeit als Reaktion auf die angewandte Spannung oder Dehnung erfolgt.

Fig. 13 zeigt die thermische Stabilitätsanalyse des Sorptionsmittels X5, 24h dar. Bei einer Temperatur im Bereich von 0°C bis ca. 200 °C ist das Sorptionsmittel stabil mit nur einem Verlust von etwa 5% des Sorptionsmittels X5. Ab einer Temperatur von ca. 400°C beginnt die Carbonisierung des Sorptionsmittels. Ein Verlust von ca. 5% an Sorptionsmittel basiert auf eingeschlossenem CO₂ bei 100°C bis 150°C.

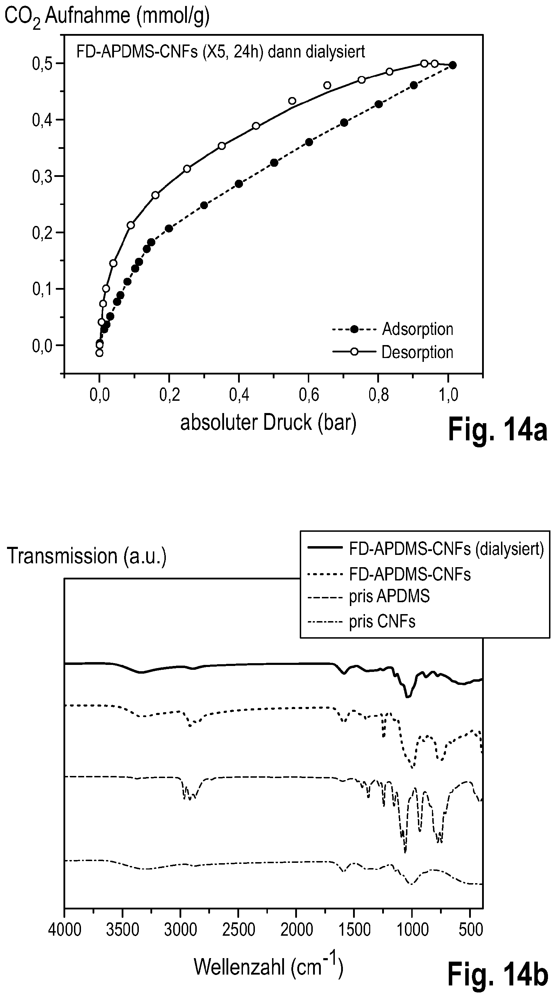

Fig. 14a stellt die Sorptionsfähigkeit von CO₂ eines Sorptionsmittels dar. Bei dem Sorptionsmittel handelt es sich oxidiertes CNF, das mit APDMS funktionalisiert wurde. Anstelle einer Gefriertrocknung, oder einer Alterung, wurde die Substanz für zwei Wochen dialysiert und dann gefriergetrocknet.

Es kann gezeigt werden, wenn die Probe anstelle mit flüssigem N₂ in einem Gefrierschrank bei - 30 °C eingefroren wird, sinkt die COz-Aufnahmekapazität anschließend nachweislich erheblich.

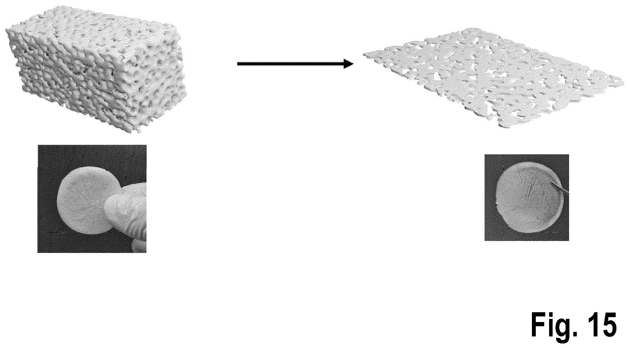

Fig. 15 stellt Darstellungsformen des Sorptionsmittels dar. Bei dem Sorptionsmittel handelt es sich um X5, 24h. Auf der linken Seite ist das Sorptionsmittel als schwammartige Substanz dargestellt. Durch Heißpressen bei Raumtemperatur für 30 Sekunden entsteht ein heißgepresster Film (siehe rechte Seite).

Wenn die schaumartige Substanz bei Raumtemperatur 30 Sekunden lang heiß gepresst wird, kann festgestellt werden, dass die CO₂-Aufnahme deutlich sinken kann.

Wenn die schaumartige Substanz 15 Minuten lang bei 80 °C heiß gepresst wird, kann festgestellt werden, dass die CO₂-Aufnahme auf 0 sinken kann und die Porosität vollständig verloren gehen kann. Das Erscheinungsbild ist gelblich und leicht transparent.

Wenn die aminierte Dispersion anstelle der Gefriertrocknung entweder durch Lösungsmittelgießen oder durch vakuumunterstützte Filtration zu einem Film verarbeitet wird, kann gezeigt werden, dass die CO₂-Aufnahme auf 0 sinken kann.

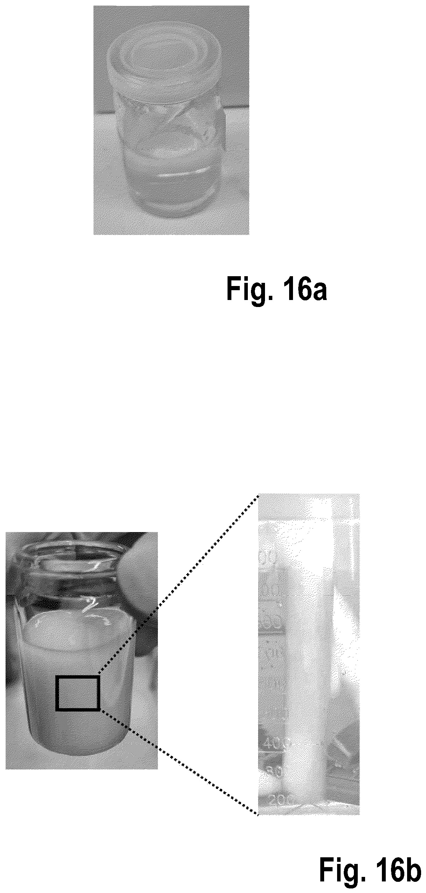

Fig. 16a und 16b zeigen den Effekt verschiedener Rührgeschwindigkeiten. Fig. 16a zeigt das Sorptionsmittel bei einer Rührgeschwindigkeit von 300 U/min. Es ist eine gelbliche kolloidale Dispersion dargestellt. Die gelbliche Farbe könnte von einer Oxidation der Amingruppen resultieren.

Fig. 16b zeigt das Sorptionsmittel bei einer Rührgeschwindigkeit von 1200 U/min. Es ist eine weiße emulsionsartige Substanz dargestellt. Aufgrund der erhöhten Rührgeschwindigkeit handelt es sich um nicht-entmischbare Flüssigkeiten. Eine Phasenseparation (siehe rechtes Bild) findet erst nach einiger Zeit statt.

Der weiße emulsionsartige Zustand kann aus dem 3D-Netzwerk der Siloxanbindungen mit den Hydroxylgruppen von oxidiertem CNF resultieren.

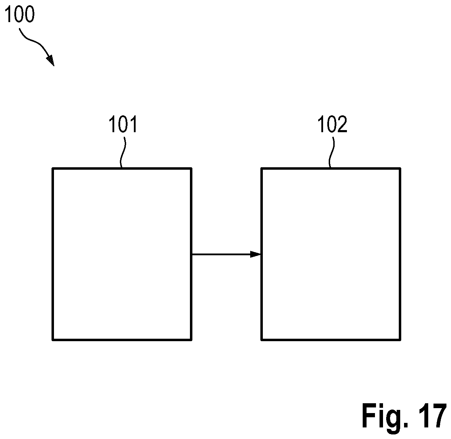

Fig. 17 stellt ein Verfahren zur Herstellung eines Sorptionsmittels 100 dar, umfassend die Schritte Bereitstellen von oxidierten Nanocellulosefibrillen (101) und Umsetzen der oxidierten Nanocellulosefibrillen mit Aminooxysilan (102).

Die physikalischen Parameter wurden wie folgt bestimmt:
BET: Die N₂-Sorptionsisotherme an Proben wurde mit dem ASAP2020 (Micromeritics) analysiert. Die Proben wurden 10 Stunden lang bei 80 °C unter Vakuum entgast. Dann wurde die N₂-Sorption in Abhängigkeit vom Gleichgewichtsdruck bei einer konstanten Temperatur von 77 K gemessen. Ein quasi-Gleichgewicht wurde angenommen, wenn die Druckvariation über 15 Sekunden weniger als 0,01 % betrug. Die spezifische Oberfläche wurde mit dem Brunauer-Emmett-Teller (BET)-Modell bestimmt.

Isotherme: Die CO₂-Sorptionsisotherme an Proben wurde analysiert, um die CO₂-Aufnahme mit dem ASAP2020 (Micromeritics) zu bewerten. Die Proben wurden 10 Stunden lang bei 80 °C unter Vakuum entgast. Dann wurde die CO₂-Sorption in Abhängigkeit vom Gleichgewichtsdruck bei einer konstanten Temperatur von 273,15 K gemessen. Ein quasi-Gleichgewicht wurde angenommen, wenn die Druckvariation über 15 Sekunden weniger als 0,01 % betrug.

CO₂-Durchbruch: Unter einem COz-Durchbruch versteht man den Wert, bei dem in einer geeigneten Versuchsanordnung eine bestimmte Menge des eintretenden CO₂ das Sorptionsmittel auch wieder verlässt und nicht von dem Sorptionsmittel sorbiert wird.

Thermogravimetrische Analyse: Ein Discovery-Gerät von TA Instruments wurde für die thermogravimetrische Auswertung verwendet, wobei die Materialien von Raumtemperatur auf 800 °C mit einer Rate von 10°C/min in einer Stickstoffumgebung erhitzt wurden.

Fourier-Transformations-Infrarotspektroskopie (FTIR): Infrarotspektren wurden unter Verwendung eines abgeschwächten Totalreflexions-Fourier-Transformations-Infrarotspektrometers (ATR-FTIR) (Varian 610-IR) gesammelt, das über einen Wellenzahlbereich von 4000 bis 400 cm⁻¹ arbeitet.

Oberflächen-ζ-Potenzial: Die Oberflächenladung von kolloidalen Suspensionen wurde bei 25°C und einem pH-Wert von 7 mit einem Zetasizer-Analysator (Malvern) gemessen. Jede Probe wurde dreimal analysiert, um Genauigkeit zu gewährleisten, was Einblicke in die Stabilität der Dispersionen gibt. Hohe ζ-Potenzialwerte deuten aufgrund starker abstoßender Kräfte zwischen den Partikeln auf stabile Dispersionen hin..

Rheologische Messungen: Scher- und Frequenzsweeptests wurden mit einem MCR 301 Rheometer (Anton Paar) durchgeführt, um die Viskosität und die viskoelastischen Eigenschaften des interessierenden Hydrogels, z.B. APDMS-CNF, zu bewerten.

Rasterelektronenmikroskopie: Ein JEOL JSM-7000F SEM wurde bei Beschleunigungsspannungen von 15 kV verwendet, um detaillierte Bilder zu erstellen.

Dynamischen Adsorptionsmessung: Die Vorrichtung zur Durchführung der dynamischen Adsorptionsmessungen umfasst ein zylindrisches Schüttbett mit einem Innendurchmesser von 10 mm. Die Reaktortemperatur wird durch einen Heiz-/Kühlthermostaten geregelt, der Wasser durch den Mantel zirkulieren lässt. Die Temperatur innerhalb des Schüttbettes wird mit einem Thermoelement gemessen. Vor jedem Versuch wird die Probe 2 Stunden lang bei 120 °C in N₂ erhitzt. Die CO₂-Adsorption erfolgt 600 Minuten lang bei 5 °C und unter Verwendung von N₂ mit 400 ppm CO₂ angereichert und 80 % relativer Luftfeuchtigkeit (RH) mit einer Durchflussrate von 0,75 l/min in Stockstoff mit zusätzlich ca. 440 ppm CO₂. Der Luftstrom wird von zwei elektronischen Massendurchflussreglern geregelt. Der CO₂-Gehalt und die relative Luftfeuchtigkeit werden massenspektrometrisch detektiert.

### Beispiele

### Herstellung von oxidierten Zellulosenanofibrillen (oxidierte CNF)

Die oxidierten Zellulosenanofibrillen werden als ca. 3% Hydrogel-Dispersion gekauft. Sie werden dann auf 0,75% Hydrogel mit einem Homogenisator verdünnt und so eine Dispersion von oxidierten Zellulosenanofibrillen hergestellt,

### Herstellung von FD-APDMS-CNF (X5, 24h)

Eine Dispersion von mit TEMPO oxidierter CNF (0,75 Gew.%) in Wasser wurde hergestellt. Eine Lösung von APDMS wurde anschließend tropfenweise zu der CNF-Dispersion in einem Trockengewichtsverhältnis von APDMS:CNF von 5:1 zugegeben und die Mischung wurde für 24h bei 300 U/min gerührt. Anschließend wurde die Mischung in flüssigen Stickstoff gegeben und für mindestens 48 Stunden gefriergetrocknet.

### Herstellung von FD-APDMS-CNF (X5 gealtert)

Es wurde eine Dispersion von mit TEMPO oxidierter CNF (0,75 Gew.-%) in Wasser hergestellt. Anschließend wurde der CNF-Dispersion eine Lösung von APDMS in einem Trockengewichtsverhältnis von APDMS:CNF von 5:1 zugetropft und die Mischung 24 Stunden lang bei 300 U/min gerührt. Dann wurde das Rühren gestoppt und die Mischung weitere 24 Stunden ruhen gelassen, um einen Sol-Gel-Übergang zu ermöglichen. Anschließend wurde die Mischung in flüssigen Stickstoff gegeben und mindestens 48 Stunden lang gefriergetrocknet.

### Vorbereitung von FD-APDMS-CNF (X3, 24h)

Es wurde eine Dispersion von mit TEMPO oxidierter CNF (0,75 Gew.-%) in Wasser hergestellt. Anschließend wurde der CNF-Dispersion eine Lösung von APDMS in einem Trockengewichtsverhältnis von 3:1 (dreimal mehr APDMS als CNF) zugetropft und die Mischung 24 Stunden lang bei 300 U/min gerührt. Anschließend wurde die Mischung in flüssigen Stickstoff gegeben und mindestens 48 Stunden lang gefriergetrocknet.

Messergebnisse weiterer Sorptionsmittel X3, X4 und X5:
X3 bedeutet, dass im Trockengewicht während der Funktionalisierung dreimal mehr Amin als oxidiertes CNF enthalten ist. X4 bedeutet, dass im Trockengewicht während der Funktionalisierung viermal mehr Amin als oxidiertes CNF enthalten ist. X5 bedeutet, dass im Trockengewicht während der Funktionalisierung fünfmal mehr Amin als oxidiertes CNF enthalten ist.

Dabei wurden die folgenden Ergebnisse mit den jeweiligen Sorptionsmitteln gemessen:

**Tabelle 6: Adsorption von CO₂**

| Sorptionsmittel | 0,15 bar CO₂, 273,15K | 1 bar CO₂, 273,15K |
|---|---|---|
| X3, 24h | 2,05 mmol/g | 2,88 mmol/g |
| X4, 24h | 2,14 mmol/g | 3,03 mmol/g |
| X5, 24h | 2,04 mmol/g | 3,21 mmol/g |

**Tabelle 7: Adsorption von CO₂**

| Sorptionsmittel | 0,15 bar CO₂, 273,15K | 1 bar CO₂, 273,15K |
|---|---|---|
| X3, gealtert | 1,64 mmol/g | 2,44 mmol/g |
| X4, gealtert | 1,57 mmol/g | 2,48 mmol/g |
| X5, gealtert | 1,57 mmol/g | 2,95 mmol/g |

Unter einem gealterten Sorptionsmittel versteht man ein Sorptionsmittel, das 24 Stunden lang mit einer Geschwindigkeit von 300 U/min gerührt wird. Anschließend wird es mindestens weitere 24 Stunden lang ungestört ruhen gelassen, um die Gelierung zu erleichtern.

**Tabelle 8: Adsorption von CO₂**

| Sorptionsmittel | Druck, bei dem die CO₂-Aufnahme = 1 mmol/g |
|---|---|
| X3, 24h | 8.000 ppm |
| X4, 24h | 10.000 ppm |
| X5, 24h | 29.000 ppm |
| X3, gealtert | 40.000 ppm |
| X4, gealtert | 59.000 ppm |
| X5, gealtert | 77.000 ppm |

Bei Erhöhung der Konzentration an Aminooxysilan (APDMS) oder Alterung der Proben ist ein höherer Druck erforderlich, um eine CO₂-Adsorptionskapazität von 1 mmol/g zu erreichen. Dies kann durch das Siloxannetzwerk erklärt werden, das die Diffusion von CO₂ bei diesem sehr verdünnten Druck behindert.

### Bezugszeichenliste

- 100: Verfahren zur Herstellung eines Sorptionsmittels
- 101: Bereitstellen von oxidierten Nanocellulosefibrillen
- 102: Umsetzen der oxidierten Nanocellulosefibrillen mit Aminooxysilan

## Patentansprüche

1. Verfahren zur Herstellung eines Sorptionsmittels, umfassend die Schritte:
- Bereitstellen von oxidierten Nanocellulosefibrillen, und
- Umsetzen der oxidierten Nanocellulosefibrillen mit Aminooxysilan.

2. Verfahren nach Anspruch 1, wobei die oxidierten Nanocellulosefibrillen TEMPO-oxidierte Nanocellulosefibrillen sind.

3. Verfahren nach Anspruch 1 oder 2, wobei das Aminooxysilan ein Aminodioxysiloxan oder ein Amino-trioxysiloxan ist.

4. Verfahren nach mindestens einem der Ansprüche 1 bis 3, wobei das Aminooxysilan ausgewählt ist aus der Gruppe bestehend aus (3-Aminopropyl)triethoxysilan (APTES), 3-(Methylamino)propyl)trimethoxysilan (APTMS), 3-(2-Aminoethylamino)propyltriethoxysilan (AEAPTS), N-(2-Aminoethyl)-3-aminopropylmethyldimethoxysilan (AEAPDMS) und 3-Aminopropyldiethoxymethylsilan (APDMS).

5. Verfahren nach mindestens einem der Ansprüche 1 bis 4, wobei das Verhältnis von oxidierten Nanocellulosefibrillen : Aminooxysilan im Bereich von 1:1 bis 1:16 ist.

6. Verfahren nach mindestens einem der Ansprüche 1 bis 5, ferner umfassend den Schritt:
- Gefriertrocknung von mit Aminooxysilan umgesetzter oxidierter Nanocellulosefibrillen.

7. Verfahren nach Anspruch 6, wobei die Gefriertrocknung durch flüssigen Stickstoff erfolgt.

8. Sorptionsmittel, hergestellt nach mindestens einem der Ansprüche 1 bis 7.

9. Sorptionsmittel nach Anspruch 8, wobei der Amingehalt von primären Amingruppen des Sorptionsmittels im Bereich von 1 mmol/g bis 12 mmol/g ist.

10. Sorptionsmittel nach Anspruch 8 oder Anspruch 9, wobei das Sorptionsmittel mindestens eine Carboxygruppe umfasst.

11. Verwendung eines Sorptionsmittels nach mindestens einem der Ansprüche 8 bis 10 zur Sorption von CO₂.

12. Verfahren zur Sorption von CO₂ umfassend die Schritte:
- Bereitstellen einer Gasmischung umfassend CO₂,
- Inkontaktbringen von mindestens einem Sorptionsmittel nach mindestens einem der Ansprüche 8 bis 10 mit der Gasmischung.

13. Verfahren nach Anspruch 12, wobei das Inkontaktbringen für eine Zeit im Bereich von 30 min bis 120 min stattfindet.
